# EUROPÄISCHE PATENTSCHRIFT

(11) **EP 3 325 979 B1**
(45) Veröffentlichungstag und Bekanntmachung des Hinweises auf die Patenterteilung: **08.12.2021**
(21) Anmeldenummer: 16724892.1
(22) Anmeldetag: 24.05.2016
(51) Int. Cl.: G01P 3/489, G01D 5/245

(54) **VERFAHREN UND VORRICHTUNG ZUM BETREIBEN EINES DREHZAHLSENSORS, DREHZAHLSENSOREINRICHTUNG**
METHOD AND DEVICE FOR OPERATING A ROTATIONAL SPEED SENSOR, ROTATIONAL SPEED SENSOR DEVICE
PROCÉDÉ ET DISPOSITIF DE FONCTIONNEMENT D'UN CAPTEUR DE VITESSE DE ROTATION, SYSTÈME DE CAPTEURS DE VITESSE DE ROTATION

(30) Priorität: 20.07.2015 DE 102015213572
(43) Veröffentlichungstag der Anmeldung: 30.05.2018
(73) Patentinhaber: Robert Bosch GmbH, 70442 Stuttgart (DE)
(72) Erfinder: TEPASS, Bernd, 71717 Beilstein (DE); WELSCH, Wolfgang, 69121 Heidelberg (DE); HAHN, Oliver, 74199 Obergruppenbach (DE)
(86) Internationale Anmeldenummer: PCT/EP2016/061697
(87) Internationale Veröffentlichungsnummer: WO 2017/012744

(56) Entgegenhaltungen:
- EP-A1- 1 393 082
- WO-A2-2016/023769
- DE-A1- 19 634 715
- DE-A1-102014 107 313
- US-A1- 2005 179 429
- US-A1- 2008 180 090
- US-A1- 2012 116 664

## Beschreibung

Die Erfindung betrifft ein Verfahren zum Betreiben eines Drehzahlsensors, insbesondere als Bestandteil eines Kraftfahrzeugs, der einen Signalgeberring mit mehreren über seinen Umfang mit abwechselnder Orientierung verteilt angeordneten Magnetelementen und einen Signalempfänger mit mindestens zwei Sensorelementen zum Erfassen der Magnetfelder der Magnetelemente aufweist, wobei die Sensorelemente gleichmäßig beabstandet zueinander angeordnet sind, und wobei in Abhängigkeit der durch die Sensorelemente erfassten Magnetfeldstärken Informationsbits erzeugt und als Drehzahlinformationssignal zur Verfügung gestellt werden.

Weiterhin betrifft die Erfindung eine entsprechende Vorrichtung zum Betreiben eines Drehzahlsensors sowie eine Drehzahlsensoreinrichtung mit dem beschriebenen Drehzahlsensor und mit der oben genannten Vorrichtung.

### Stand der Technik

Im Automobilbau ist die Kenntnis aktueller Drehzahlen von Bedeutung für sicherheitsrelevante Systeme sowie zur korrekten Ansteuerung unterschiedlicher Antriebssysteme. Insbesondere bei der Ansteuerung elektrischer Maschinen ist ein Abgleich mit der Ist-Drehzahl von hoher Bedeutung. Üblicherweise wird die Drehzahl mittels eines Drehzahlsensors erfasst. Die Raddrehzahlinformation wird dabei insbesondere durch das Abtasten eines magnetischen Encoders oder eines ferromagnetischen Zahnrads ermittelt, der als Signalgeberring mit mehreren gleichmäßig über seinen Umfang verteilt angeordneten Magnetelementen, insbesondere Permanentmagnete, ausgebildet ist, die eine abwechselnde magnetische Orientierung aufweisen. Mittels eines oder mehrerer Sensorelemente, die gehäusefest angeordnet sind, werden die Magnetfelder der Magnetelemente bei einer Rotation des Signalgeberrings erfasst, wobei in Abhängigkeit von der Stärke des jeweilig erfassten Magnetfelds ein Ausgabestrom mittels einer Stromschnittstelle eines Steuergeräts zur weiteren Verwendung als Drehzahlinformationssignal zur Verfügung gestellt wird.

Die Drehzahlinformation wird dabei mit jedem Magnetfeldrichtungswechsel zur Verfügung gestellt. Die Auflösung des Drehzahlsignals hängt damit im Wesentlichen von der Anzahl der Magnetelemente des Signalgeberrings ab.

Aus der nachveröffentlichten Offenlegungsschrift WO 2016/023769 A2 geht bereits ein gattungsgemäßes Verfahren hervor. Ähnliche Verfahren sind auch aus den Offenlegungsschriften US 2012/116664 A1 und EP 1 393 082 A1 bekannt. Weitere Verfahren zur Drehzahlbestimmung sind beispielsweise auch aus der DE 10 2014 107 313 A1, sowie aus den Druckschriften US 2008/180090 A1, US 2005/179429 A1 und DE 196 34 715 A1 bekannt.

### Offenbarung der Erfindung

Durch das erfindungsgemäße Verfahren mit den Merkmalen des Anspruchs 1 wird der Vorteil erreicht, dass die Signalauflösung beziehungsweise die Auflösung der Drehzahlinformation, die grundsätzlich abhängig von der Anzahl und Anordnung der Magnetelemente ist, unabhängig von beziehungsweise relativ zu Anzahl und Anordnung der Magnetelemente des Signalgeberrings erhöht wird. Erfindungsgemäß ist vorgesehen, dass dem Drehzahlinformationssignal eine weitere Information hinzugefügt und zur Verfügung gestellt wird, wobei die weitere Information zu einer erhöhten Wegauflösung führt. Erfindungsgemäß ist vorgesehen, dass in Abhängigkeit von einer ermittelten Drehzahl insbesondere des Signalgeberrings wenigstens ein Zusatzdrehzahlinformationssignal erzeugt und dem Drehzahlinformationssignal hinzugefügt wird. Dadurch, dass das Zusatzdrehzahlinformationssignal in Abhängigkeit von der erfassten Drehzahl hinzugefügt wird, wird erreicht, dass in Bereichen, in welchen das Zusatzdrehzahlinformationssignal entweder nicht mehr von Nöten ist, aufgrund einer Überlagerung mit dem herkömmlichen Drehzahlinformationssignal, das Zusatzdrehzahlinformationssignal entfällt, und da, wo es benötigt wird, insbesondere in niedrigen Drehzahlbereichen, zur Verfügung steht. Erfindungsgemäß wird das Zusatzdrehzahlinformationssignal als Zusatzinformationsbit, insbesondere in dem Drehzahlinformationssignal, bereitgestellt.

Erfindungsgemäß ist dazu vorgesehen, dass das Zusatzdrehzahlinformationssignal nur so lange erzeugt wird, bis die ermittelte Drehzahl eine vorgebbare Grenzdrehzahl oder Schwellgeschwindigkeit überschreitet. Damit wird die Drehzahlauflösung nur in einem unterhalb der Grenzdrehzahl liegenden Drehzahlbereich zur Verfügung gestellt. Insbesondere dann, wenn der Signalgeberring einer elektrischen Antriebsmaschine des Kraftfahrzeugs zugeordnet ist, können dadurch bei langsamen Fahrgeschwindigkeiten des Kraftfahrzeugs die Drehzahl der Antriebsmaschine sowie ein Fahrweg des Kraftfahrzeugs besonders genau bestimmt werden. Das Verfahren wird insbesondere dann durchgeführt, wenn ein Parkvorgang, insbesondere ein automatisierter Parkvorgang durchgeführt wird. Im niedrigen Geschwindigkeitsbereich von beispielsweise 0 bis 50 km/h erfolgt durch das Verfahren eine vervielfachte Schnittstellenfrequenz, während im höheren Geschwindigkeitsbereich, beispielsweise ab 50 km/h, also insbesondere oberhalb der Grenzdrehzahl, eine Grundschnittstellenfrequenz vorliegt, die auch bei weiter zunehmender Drehzahl/Geschwindigkeit ein sicheres Ergebnis liefert. Das Ausblenden der Zusatzinformation kann durch Wegfall des gesamten Informationspakets "Speedpuls inklusive Bitprotokoll" oder durch sukzessiven Wegfall der Datenbits/Informationsbits und abschließend des Speedpulses erfolgen.

Besonders bevorzugt ist vorgesehen, dass das Zusatzdrehzahlinformationssignal in Abhängigkeit von einer erfassten Magnetfeldstärke erzeugt wird. So kann durch Vorgabe von Grenzwerten erreicht werden, dass das Zusatzinformationsbit oder Zusatzdrehzahlinformationssignal bei einer oder mehreren unterschiedlichen Magnetfeldstärken zusätzlich ausgegeben wird, um dadurch die Drehzahlinformation zu erhöhen.

Erfindungsgemäß ist vorgesehen, dass das Zusatzdrehzahlinformationssignal mit einer Stromstärke erzeugt wird, die sich von der Stromstärke der informationsbits unterscheidet, sodass bei dem Auswerten des Drehzahlinformationssignals einfach zwischen Informationsbit und zusätzliches Zusatzinformationsbits unterschieden werden kann.

Erfindungsgemäß wird zum Erzeugen des Drehzahlinformationssignals ein AK-Protokoll verwendet. Ein typischer Schnittstellenstrom, erzeugt durch den Drehzahlsensor, von beispielsweise I_{L} = 7 mA ergibt dann in dem Drehzahlinformationssignal ein "low" als Signalinformation, ein typischer Schnittstellenstrom von I_{M} = 14 mA ergibt einen mittleren Strom für Bit-Informationen und ein Schnittstellenstrom von I_{H} = 28 mA ergibt einen Synchronisationsimpuls als Signalinformation. Der Schnittstellenstrom des Zusatzinformationsbits liegt zweckmäßigerweise zwischen den genannten Stromwerten. Bevorzugt ist vorgesehen, dass das Zusatzinformationsbit zu einem Schnittstellenstrom von I_{Z} = 21 mA führt.

Weiterhin ist bevorzugt vorgesehen, dass der Drehzahlsensor beziehungsweise der Signalempfänger drei Sensorelemente aufweist, wobei Ausgangssignale der Sensorelemente zur Erhöhung der Auflösung des Drehzahlinformationssignals miteinander verknüpft werden. Dabei kann in Abhängigkeit von der gewählten Verknüpfung die Auflösung des Drehzahlsignals unterschiedlich weit erhöht werden. Zusätzlich zu den Signalverläufen der einzelnen Brücken werden durch die gewählte Verknüpfung oder Verknüpfungen weitere Informationen bereitgestellt, wie beispielsweise eine Drehrichtungsangabe, die die Auswertung des Drehzahlinformationssignals verbessern beziehungsweise erleichtern.

Gemäß einer bevorzugten Weiterbildung der Erfindung ist vorgesehen, dass bei Erfassen eines Magnetfeldstärkenmaximums (negativ und/oder positiv) ein Zusatzinformationsbit erzeugt wird. Dadurch stehen zusätzlich zu den üblicherweise erfassten Nulldurchgängen das AK-Protokolls auch noch Informationen über die Maxima der erfassten Magnetverstärkung zur Verfügung, sodass die Auflösung der Drehzahlinformation zumindest verdoppelt wird, was insbesondere bei den niedrigen Geschwindigkeiten, wie zuvor bereits erwähnt, zu den bereits genannten Vorteilen führt.

Die erfindungsgemäße Vorrichtung mit den Merkmalen des Anspruchs 5 zeichnet sich dadurch aus, dass das Steuergerät speziell dazu hergerichtet ist, das erfindungsgemäße Verfahren durchzuführen. Es ergeben sich hierdurch die bereits genannten Vorteile. Weitere Merkmale und Vorteile ergeben sich aus dem zuvor beschriebenen sowie aus den Ansprüchen.

Die erfindungsgemäße Drehzahlsensoreinrichtung mit den Merkmalen des Anspruchs 6 zeichnet sich durch die erfindungsgemäße Vorrichtung aus. Es ergeben sich hierbei die bereits genannten Vorteile für die Drehzahlsensoreinrichtung. Weitere Merkmale und Vorteile ergeben sich aus dem zuvor beschriebenen sowie aus den Ansprüchen.

Besonders bevorzugt ist vorgesehen, dass der Signalempfänger drei Sensorelemente aufweist, die insbesondere als Brückenschaltung ausgebildet sind. Insbesondere durch eine Verknüpfung der Signalausgänge der Brückenschaltung wird die Auflösung des Drehzahlinformationssignals weiter erhöht.

Im Folgenden soll die Erfindung anhand der Zeichnung näher erläutert werden.

Dazu zeigen
- Figur 1: ein Verfahren zum Erzeugen eines zusätzlichen Drehzahlinfor-mationssignals,
- Figur 2: eine vereinfachte Darstellung einer Drehzahlsensoreinrichtung,
- Figur 3: ein bekanntes Verfahren und
- Figur 4: eine Weiterbildung des Verfahrens.

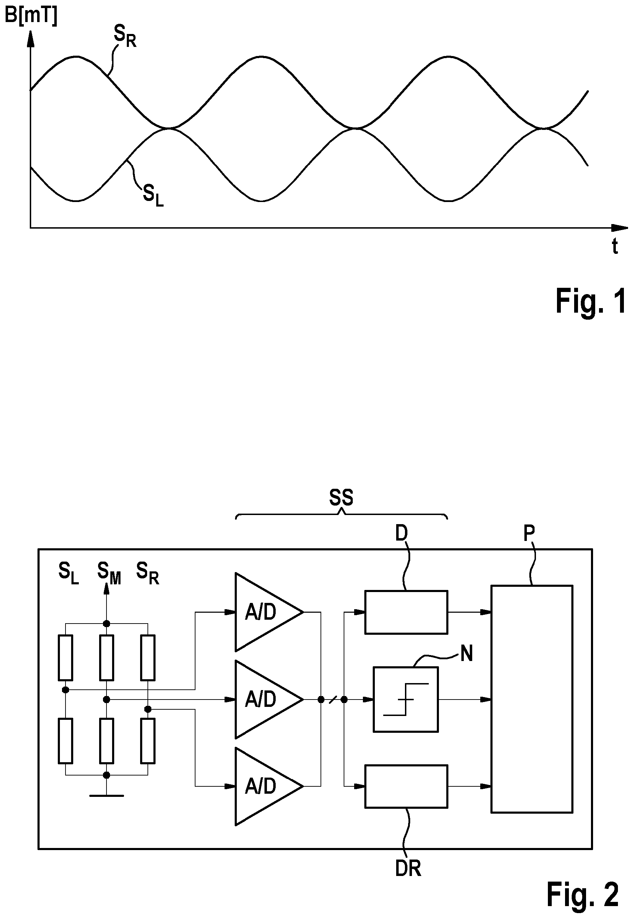

Üblicherweise wird die Drehzahl eines Rads oder einer Antriebsmaschine mit Hilfe eines Drehzahlsensors berührungsfrei ermittelt. Dabei ist es bekannt, dem drehenden Element einen Encoder in Form eines Signalgeberrings zuzuordnen, der eine Vielzahl über seinen Umfang gleichmäßig verteilt angeordnete Magnetelemente aufweist, die mit abwechselnder magnetischer Orientierung angeordnet sind. Dem Signalgeberring sind gehäuseseitig mindestens zwei feststehende Sensorelemente zugeordnet, die die von den Magnetelementen erzeugten Magnetfelder erfassen können. Dreht sich der Signalgeberring, so ändern sich die durch die Sensorelemente erfassten Magnetfeldstärken, wodurch sich beispielsweise die in Figur 1 gezeigten Signalverläufe S_{R} und S_{L} ergeben.

Die Figur 1 zeigt ein Ausführungsbeispiel für eine Drehzahlsensoreinrichtung, die zwei Sensorelemente S_{R}, S_{L}, ein rechtes Sensorelement (R) und ein linkes Sensorelement (L) umfasst. Aufgrund des Abstands der Sensorelemente zueinander sowie der benachbarten Magnetelemente zueinander ergeben sich die dargestellten Magnetfeldstärken. Durch Anwendung des bekannten AK-Protokolls wird mittels einer Stromschnittstelle in Abhängigkeit der erfassten Magnetfeldstärken ein Drehzahlinformationssignal zur Verfügung gestellt. Ein typischer Schnittstellenstrom, der von der Drehzahlsensoreinrichtung zur Verfügung gestellt wird, von I_{L}=7 mA ergibt im Steuergerät ein "low" als Signalinformation, ein typischer Schnittstellenstrom von I_{N}=14 mA ergibt einen mittleren Strom für Bit-Informationen und ein Schnittstellenstrom von I_{H}=28 mA ergibt einen Synchronisationsimpuls als Signalinformation.

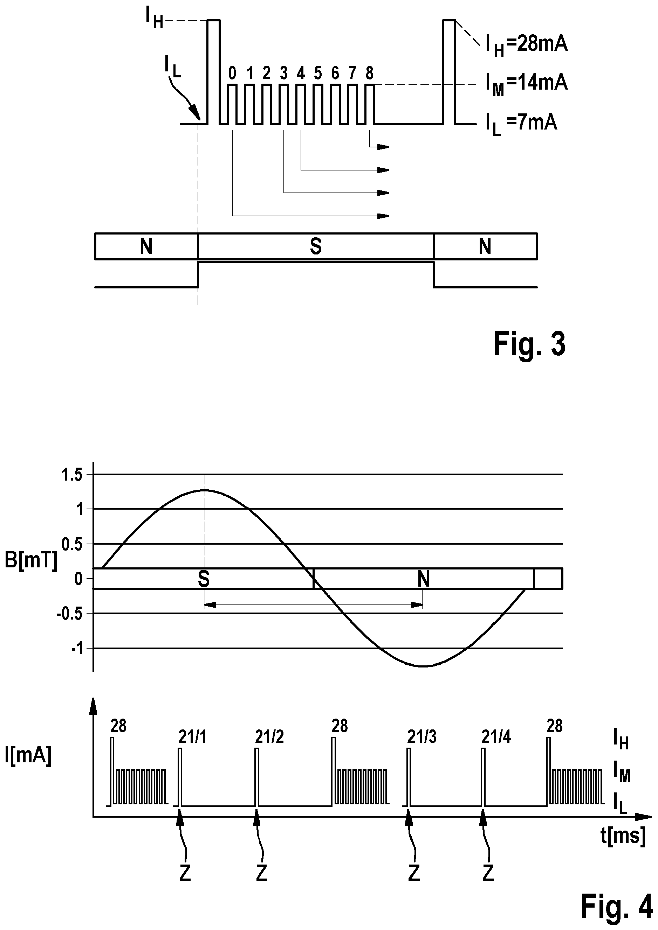

Dies ist in Figur 3 beispielhaft dargestellt. Die Drehzahlinformation erfolgt mit jedem Wechsel von einem Nordpol- zu einem benachbarten Südpol S des Signalgeberrings beziehungsweise vom Südpol S zum Nordpol N, also bei einem Wechsel der Ausrichtung des magnetischen Feldes. Damit ist die Auflösung einer Drehzahl- und Weginformation durch die Anzahl der Magnetelemente des Signalgeberrings beschränkt. Durch das im Folgenden beschriebene Verfahren wird die Auflösung des Drehzahlinformationssignals erhöht, sodass eine genauere Information über eine zurückgelegte Wegstrecke auch bei langsamen Drehzahlen zur Verfügung gestellt wird, sodass das Verfahren beispielsweise bei einem automatisierten Einparkvorgang eines Kraftfahrzeugs oder bei einem sogenannten ferngesteuerten Einparken genutzt werden kann. Eines der Informationsbits 0-8 kann dabei als Zusatzinformationsbit genutzt werden.

Um die Auflösung des Drehzahlinformationssignals zu erhöhen sind gemäß dem vorliegenden Ausführungsbeispiel drei Sensorelemente vorgesehen, wobei in Bezug auf die zuvor bereits beschriebenen zwei Sensorelemente S_{R} und S_{L} ein weiteres Sensorelement S_{M} vorhanden ist, das zwischen den beiden Sensorelementen S_{R} und S_{L} liegt und gleich beabstandet zu beiden Sensorelementen ist. Somit sind die drei Sensorelemente insbesondere räumlich voneinander getrennt und gleichmäßig voneinander beabstandet angeordnet. Vorteilhafterweise können auch noch weitere Sensorelemente hinzugefügt werden. Die Sensorelemente können dabei als Hall-, GMR-, AMR- oder TMR-Sensoren ausgelegt sein. Insbesondere ist vorgesehen, dass die zwei äußeren Sensorelemente mit einem definierten Abstand zu dem mittleren Sensorelement S_{M} angeordnet sind. Werden weitere Sensorelemente ergänzt, so sind diese ebenfalls äquidistant zu den bereits vorhandenen Sensorelementen anzuordnen.

Die drei Sensorelemente sind gemäß dem vorliegenden Ausführungsbeispiel in Form von Halbbrücken ausgebildet, wie in Figur 2 gezeigt. Die Ausgangssignale der einzelnen Brücken werden Analog-Digitalwandlern A/D einer Stromschnittstelle SS zugeführt. Die Stromschnittstelle SS umfasst ein Diagnosemodul D, eine Nulldurchgangserfassungseinrichtung N sowie eine Drehrichtungserkennung DR. Als Ergebnis wird ein Drehzahlfunktionssignal in Form eines Protokolls P zur Verfügung gestellt. Die Auswertung der einzelnen oder der Kombination der Sensorelemente S_{L}, S_{M} und S_{R} werden derart auf die Stromschnittstelle SS gelegt, dass nicht nur der Nulldurchgang im Drehzahlinformationssignal abgebildet wird, sondern zudem auch das Ergebnis der einzelnen oder der Kombination der Sensorelemente. Dadurch ergibt sich eine Verdoppelung, Verdreifachung oder Vervierfachung der ursprünglichen Signalfrequenz und damit der Signalauflösung beziehungsweise des Informationsgehalts des Drehzahlinformationssignals. Die Anwendung der erhöhten Signalauflösung wird nach einer nicht erfindungsgemäßen Ausbildung über ein AK-Protokoll Bit angezeigt.

Dabei wird der Protokollübergang, wie er üblicherweise im AK-Protokoll definiert ist, bei hohen Geschwindigkeiten nicht beeinflusst. Zusätzlich oder alternativ werden vorteilhafterweise mehrere Schaltschwellen entweder fix oder in Abhängigkeit der Stärke eines äußeren stimulierenden Signals eingeführt. Beim Überschreiten jeder der Schaltschwellen erzeugt die Drehzahlsensoreinrichtung dann einen weiten Ausgangspuls, durch welchen die Auflösung des Drehzahlinformationssignals weiter erhöht wird. Die Schaltschwellen können programmierbar oder adaptiv vorgegeben sein.

Auch ist es denkbar, die Drehzahlsensoreinrichtung als Winkelsensor auszuführen, der von jedem Polpaar der Magnetelemente den aktuellen Winkel misst und an bestimmten Stellen, beispielsweise alle 30° (pro Polpaar 6 Flanken/Pulse, statt bisher 2) einen Flankenwechsel oder Puls ausgibt.

Alternativ oder zusätzlich ist es denkbar, verschiedene Sensortechnologien in der Drehzahlsensoreinrichtung zu vereinigen, wie beispielsweise Hall-Sensoren und xMR-Sensoren. Der Vorteil liegt darin, dass unterschiedliche Sensortechnologien auf unterschiedliche Komponenten des von den Magnetelementen jeweils bereitgestellten Magnetfeldes sensitiv sind und diese Komponenten einen Phasenversatz zueinander aufweisen. Dadurch ist es möglich, dass jeweils im magnetischen Nulldurchgang und somit an der steilsten Stelle des Signals geschaltet wird, was einen guten Jitter und eine Verdopplung der Wegauflösung ermöglicht. Zusätzlich ist es denkbar, sowohl im Nulldurchgang als auch auf den Maxima beziehungsweise Minima des magnetischen Signals, also der erfassten Magnetfeldstärke einen Puls beziehungsweis ein Bit als zusätzliche Information zu erzeugen.

Zum Erhöhen der Auflösung des Drehzahlinformationssignals werden die folgenden Lösungen vorgeschlagen:
Zur Verdopplung der Auflösung ist vorgesehen, dass zusätzlich zu dem Erfassen und Auswerten eines Nulldurchgangs, also des Wechsels der Magnetfeldrichtung, das Erreichen eines Maximums oder Minimums detektiert und als Ausgangssignal ausgegeben wird.

Weiterhin ist zur Verdopplung der Auflösung alternativ oder zusätzlich vorgesehen, dass der Signalverlauf der Sensorelemente S_{L}, S_{M} und S_{R} derart verknüpft wird, dass sich resultierend ein zusätzliches Ausgangssignal ergibt. Weitere Signalverknüpfungen und deren Auswertung ermöglicht die Festlegung der Drehrichtung. Durch die geeignete Verknüpfung der Signale der Sensorelemente ist eine Verdopplung der Auflösung darstellbar und als Ausgangssignal auszugeben. Für eine Verdreifachung der Auflösung ist ausgehend von dem Beispiel aus Figur 2 vorgesehen, dass der jeweilige Abgriff der Halbbrücken derart ausgewertet wird, dass der von dem jeweiligen Sensorelement S_{L}, S_{M}, S_{R} erfasste Nulldurchgang als Ausgangssignal auf den Ausgang gegeben wird.

Für eine Versechsfachung der Auslösung basierend auf der Anordnung von Figur 2 ist vorgesehen, dass der jeweilige Abgriff der Halbbrücken derart ausgewertet wird, dass der nur von den Sensorelementen S_{L}, S_{M}, S_{R} jeweils erfasste Nulldurchgang als Ausgangssignal und zudem das Erreichen des Maximums detektiert und als Ausgangssignal ausgegeben wird.

Für eine weitere Erhöhung der Auflösung basierend auf der Anordnung nach Figur 2 ist vorgesehen, dass weitere äquidistant angeordnete Sensorelemente vorgesehen werden. Zudem kann neben der Auswertung des Nulldurchgangs der einzelnen Sensorelemente ebenfalls das Maximum/Minimum erfasst und ausgewertet werden.

Insbesondere ist vorgesehen, dass eine Variable festgelegt wird, mit der eine Geschwindigkeitsschwelle vorgegeben werden kann. Die Geschwindigkeitsschwelle kann vorteilhafterweise projektspezifisch im Steuergerät beziehungsweise Bauelement festgelegt werden. Bei Festlegung einer Geschwindigkeitsschwelle ungleich 0 wird immer dann, wenn die Geschwindigkeit kleiner oder gleich der Geschwindigkeitsschwelle ist, das oben beschriebene Verfahren zur Erhöhung der Auflösung des Drehzahlinformationssignals umgesetzt und wenigstens ein Zusatzinformationsbit gesetzt. Oberhalb der Geschwindigkeitsschwelle wird das Zusatzinformationsbit dem Drehzahlinformationssignal nicht mehr hinzugefügt. Besonders bevorzugt ist vorgesehen, dass eine Hysterese für die Geschwindigkeitsschwelle angewendet wird, um ein Oszillieren zwischen erhöhter Auflösung und normalem Betrieb zu vermeiden.

Durch die vorteilhafte Beschränkung des Verfahrens auf einen unteren Geschwindigkeitsbereich, der durch die Geschwindigkeitsschwelle beziehungsweise durch eine Grenzdrehzahl begrenzt ist, wird gewährleistet, dass bei niedrigen Drehzahlen oder Geschwindigkeiten eine hohe Auflösung des Drehzahlinformationssignals vorliegt, und bei hohen Geschwindigkeiten die sichere Übertragung der Drehzahlinformation noch gewährleistet werden kann. Ab einer magnetischen Frequenz von etwa 5 kHz kann ein AK-Protokoll die sichere Informationsübertragung nicht mehr gewährleisten. Dies liegt an der Signalbreite der Protokollbits von typischerweise 50 µs. Wird ein "high" und ein "low" für ein Signal zugrunde gelegt, ergibt sich eine Periode von 100 µs. Dies entspricht einer elektrischen Frequenz von 10 kHz an der AK-Schnittstelle und einer magnetischen Frequenz von 5 kHz.

Durch das Verfahren wird somit bei niedrigen Geschwindigkeiten/Drehzahlen ein Zusatzinformationsbit durch die Stromschnittstelle SS von der Drehzahlsensoreinrichtung zur Verfügung gestellt und beispielsweise an ein Steuergerät übertragen, ohne dass das bisher verwendete AK-Protokoll beeinflusst wird. Das Zusatzinformationsbit führt zu einer erhöhten Wegauflösung (tick), abgeleitet vom Verlauf der magnetischen Flussdichte und der spezifischen Anordnung der Sensorelemente S_{L}, S_{M}, S_{R} (Anzahl und räumliche Position) im Drehzahlsensor.

Figur 4 zeigt beispielhaft ein durch das vorgestellte Verfahren erzeugtes Zusatzdrehzahlinformationssignal Z, das einen Schnittstellenstrom von I_{Z} 21 mA ergibt. Zur Bereitstellung des Zusatzdrehzahlinformationssignals kann, wie zuvor bereits erwähnt, einer der Informationsbits als Zusatzinformationsbit genutzt werden. Dies ist selbstverständlich nur beispielhaft, es können auch andere Stromwerte für das Zusatzinformationsbit gewählt werden.

Wie bereits erwähnt, wird bei niedriger Drehzahl beziehungsweise Geschwindigkeit das Drehzahlinformationssignal durch die weitere Information beziehungsweise das Zusatzdrehzahlinformationssignal Z beziehungsweise das Zusatzinformationsbit ergänzt, das die Wegauflösung im vorliegenden Beispiel um den Faktor 3 erhöht. Bei höheren Geschwindigkeiten, insbesondere oberhalb von 50 km/h, wird das Zusatzdrehzahlinformationssignal wieder aus dem Signalfluss herausgenommen.

Das Zusatzdrehzahlinformationssignal oder der "weitere-Informations-Impuls" wird in die Signalinformation eingebaut, wie beispielsweise in Figur 3 gezeigt, bei physikalisch alle 60° Signalgeberringwinkel. Werden andere Encoderwinkel/Signalgeberringwinkel gewählt, ergibt sich eine entsprechende Aufteilung über den Winkel beziehungsweise über die Zeit (je nach Frequenz). Der Drehzahlinformationspuls I_{H} (Nulldurchgangspuls) und die Summe der Bits (14 mA) stellt bei typischer Schnittstellenfrequenz ein Impulspaket mit einem festen Zeitraster dar. Das Zusatzdrehzahlinformationssignal wird dem Encoderwinkel zugeordnet und an einer entsprechenden Position im AK-Protokoll mit entsprechender Amplitude (vorliegend 21 mA) hinzugefügt, bis die Geschwindigkeitsschwelle überschritten wird. Mit zunehmender Geschwindigkeit erhöht sich die Frequenz des Signals an der Stromschnittstelle SS. Dabei nähert sich mit zunehmender Schnittstellenfrequenz das Zusatzdrehzahlinformationssignal dem AK-Impulspaket an. Dies liegt an der feststehenden Zeit für das AK-Impulspaket des AK-Protokolls. Nähert sich nun das Zusatzdrehzahlinformationssignal dem AK-Impulspaket bis auf 50 µs an, wird als erstes das Zusatzdrehzahlinformationssignal aus der Schnittstelleninformation ausgeblendet, wobei hierzu vorzugsweise eine Frequenzhysterese vorgesehen ist, um ein wirres Zu- und Wegschalten des Zusatzdrehzahlinformationssignal zu vermeiden. Grundsätzlich ist für höhere Frequenzen auch ein "Hineinwandern" des Signals mit Zusatzinformationsbits in das Bitpaket möglich.

## Patentansprüche

1. Verfahren zum Betreiben eines Drehzahlsensors, insbesondere eines Kraftfahrzeugs, mit einem Signalgeberring, der mehrere gleichmäßig über seinen Umfang mit abwechselnder magnetischer Orientierung verteilt angeordnete Magnetelemente aufweist, und mit einem Signalempfänger, der mindestens zwei Sensorelemente (SL,SM,SR) zum Erfassen der Magnetfelder der Magnete aufweist, wobei die Sensorelemente (SL,SM,SR) gleichmäßig beabstandet zueinander angeordnet sind, und wobei in Abhängigkeit der durch die Sensorelemente (SL,SM,SR) erfassten Magnetfeldstärken Informationsbits erzeugt und als Drehzahlinformationssignal zur Verfügung gestellt werden, wobei in Abhängigkeit von einer ermittelten Drehzahl des Signalgeberrings wenigstens ein Zusatzdrehzahlinformationssignal erzeugt und zur Erhöhung der Signalauflösung dem Drehzahlinformationssignal hinzugefügt wird, **dadurch gekennzeichnet, dass** zum Erzeugen des Drehzahlinformationssignals ein AK-Protokoll mit einer niedrigen, mittleren und hohen Stromstärke verwendet wird, dass das Zusatzdrehzahlinformationssignal einem Signalgeberringwinkel des Signalgeberrings zugeordnet und als Informationsbit an einer entsprechenden Position im AK-Protokoll dem Drehzahlinformationssignal hinzugefügt wird, wobei das Zusatzdrehzahlinformationssignal eine Stromstärke aufweist, welche sich von der niedrigen, mittleren und hohen Stromstärke des Drehzahlinformationssignals unterscheidet, und dass das Zusatzdrehzahlinformationssignal nur solange erzeugt wird, bis die ermittelte Drehzahl eine vorgebbare Grenzdrehzahl überschreitet.

2. Verfahren nach Anspruch 1, **dadurch gekennzeichnet, dass** das Zusatzdrehzahlinformationssignal in Abhängigkeit von der erfassten Magnetfeldstärke erzeugt wird.

3. Verfahren nach einem der vorhergehenden Ansprüche, **dadurch gekennzeichnet, dass** der Signalempfänger mit drei Sensorelementen (SL,SM,SR) ausgebildet wird, wobei Ausgangssignale der Sensorelemente (SL,SM,SR) zur Erhöhung der Auflösung des Drehzahlinformationssignals miteinander verknüpft werden.

4. Verfahren nach einem der vorhergehenden Ansprüche, **dadurch gekennzeichnet, dass** jeweils bei Erfassen eines Magnetfeldstärkenmaximums ein Zusatzdrehzahlinformationssignal erzeugt wird.

5. Vorrichtung zum Betreiben eines Drehzahlsensors, insbesondere eines Kraftfahrzeugs, der einen Signalgeberring mit mehreren gleichmäßig über seinen Umfang mit abwechselnder magnetischer Orientierung verteilt angeordnete Magnetelemente und einen Signalempfänger mit mindestens zwei Sensorelementen (SL,SM,SR) zum Erfassen der Magnetfelder der Magnetelemente aufweist, wobei die Sensorelemente (SL,SM,SR) gleichmäßig beabstandet zueinander angeordnet sind, mit einem Steuergerät, das so ausgebildet ist, dass es in Abhängigkeit von den durch die Sensorelemente (SL,SM,SR) erfassten Magnetfeldstärken Informationsbits erzeugt und als Drehzahlinformationssignal zur Verfügung stellt, **dadurch gekennzeichnet, dass** das Steuergerät speziell dazu hergerichtet ist, das Verfahren nach einem der Ansprüche 1 bis 4 durchzuführen.

6. Drehzahlsensoreinrichtung für ein Kraftfahrzeug, mit einem Drehzahlsensor, der einen Signalgeberring mit mehreren gleichmäßig über seinen Umfang mit abwechselnder magnetischer Orientierung verteilt angeordneten Magnetelementen und einen Signalempfänger mit mindestens zwei Sensorelementen (SL,SM,SR) zum Erfassen von Magnetfeldstärken der Magnetelemente aufweist, wobei die Sensorelemente (SL,SM,SR) gleichmäßig beabstandet zueinander angeordnet sind, **gekennzeichnet durch** eine Vorrichtung nach Anspruch 5 zum Betreiben des Drehzahlsensors.

7. Drehzahlsensoreinrichtung nach Anspruch 6, **dadurch gekennzeichnet, dass** der Signalempfänger drei Sensorelemente (SL,SM,SR) aufweist, die als Brückenschaltung ausgebildet sind.

## Claims

1. Method for operating a rotational speed sensor, in particular of a motor vehicle, including a signal generator ring which has multiple magnetic elements which are equally distributed over its circumference having an alternating magnetic orientation, and including a signal receiver which has at least two sensor elements (S_{L}, S_{M}, S_{R}) for detecting the magnetic fields of the magnets, wherein the sensor elements (S_{L}, S_{M}, S_{R}) are spaced at an equal distance from one another, and wherein information bits are generated as a function of the magnetic field strengths detected by the sensor elements (S_{L}, S_{M}, S_{R}) and are provided as a rotational speed information signal, wherein at least one additional rotational speed information signal is generated as a function of an ascertained rotational speed of the signal generator ring and is added to the rotational speed information signal in order to increase the signal resolution, **characterized in that** an AK protocol with a low, medium and high current strength is used for generating the rotational speed information signal, **in that** the additional rotational speed information signal is assigned to a signal generator ring angle of the signal generator ring and is added to the rotational speed information signal as an information bit at a corresponding position in the AK protocol, wherein the additional rotational speed information signal has a current strength which differs from the low, medium and high current strength of the rotational speed information signal, and **in that** the additional rotational speed information signal is generated only until the ascertained rotational speed exceeds a predefinable limit rotational speed.

2. Method according to Claim 1, **characterized in that** the additional rotational speed information signal is generated as a function of the detected magnetic field strength.

3. Method according to one of the preceding claims, **characterized in that** the signal receiver is configured to have three sensor elements (S_{L}, S_{M}, S_{R}), wherein output signals of the sensor elements (S_{L}, S_{M}, S_{R}) are linked to one another for increasing the resolution of the rotational speed information signal.

4. Method according to one of the preceding claims, **characterized in that**, in the case of the detection of a magnetic field strength maximum, an additional rotational speed information signal is generated in each case.

5. Apparatus for operating a rotational speed sensor, in particular of a motor vehicle, said rotational speed sensor including a signal generator ring having multiple magnetic elements which are equally distributed over its circumference having an alternating magnetic orientation, and a signal receiver including at least two sensor elements (S_{L}, S_{M}, S_{R}) for detecting the magnetic fields of the magnetic elements, wherein the sensor elements (S_{L}, S_{M}, S_{R}) are spaced at an equal distance from one another, including a control unit which is configured in such a manner that it generates information bits as a function of the magnetic field strengths detected by the sensor elements (S_{L}, S_{M}, S_{R}) and provides them as a rotational speed information signal, **characterized in that** the control unit is specifically arranged to carry out the method according to one of Claims 1 to 4.

6. Rotational speed sensor device for a motor vehicle, including a rotational speed sensor which includes a signal generator ring having multiple magnetic elements which are equally distributed over its circumference having an alternating magnetic orientation, and a signal receiver including at least two sensor elements (S_{L}, S_{M}, S_{R}) for detecting magnetic field strengths of the magnetic elements, wherein the sensor elements (S_{L}, S_{M}, S_{R}) are spaced at an equal distance from one another, **characterized by** an apparatus according to Claim 5 for operating the rotational speed sensor.

7. Rotational speed sensor device according to Claim 6, **characterized in that** the signal receiver has three sensor elements (S_{L}, S_{M}, S_{R}) which are configured as a bridge circuit.

## Revendications

1. Procédé de fonctionnement d'un capteur de vitesse de rotation, en particulier d'un véhicule automobile, comprenant une bague génératrice de signal qui comporte une pluralité d'éléments magnétiques régulièrement répartis sur sa circonférence avec une orientation magnétique alternée, et un récepteur de signaux qui comporte au moins deux éléments capteurs (S_{L}, S_{M}, S_{R}) destinés à détecter les champs magnétiques des aimants, les éléments capteurs (S_{L}, S_{M}, S_{R}) étant disposés à équidistance les uns des autres, et des bits d'information étant générés, et rendus disponibles sous la forme d'un signal d'information de vitesse de rotation, en fonction des intensités de champ magnétique détectées par les éléments capteurs (S_{L}, S_{M}, S_{R}), au moins un signal d'information de vitesse de rotation supplémentaire étant généré en fonction d'une vitesse de rotation déterminée de la bague génératrice de signal et ajouté au signal d'information de vitesse de rotation pour augmenter la résolution de signal, **caractérisé en ce qu'**un protocole AK est utilisé avec une intensité de courant faible, moyenne et élevée pour générer le signal d'information de vitesse de rotation, **en ce que** le signal d'information de vitesse de rotation supplémentaire est associé à un angle de la bague génératrice de signal et est ajouté au signal d'informations de vitesse de rotation sous la forme d'un bit d'information à une position correspondante dans le protocole AK, le signal d'information de vitesse de rotation supplémentaire ayant une intensité de courant qui diffère de l'intensité de courant faible, moyenne et élevée du signal d'information de vitesse de rotation, et **en ce que** le signal d'information de vitesse de rotation supplémentaire n'est généré que jusqu'à ce que la vitesse de rotation déterminée dépasse une vitesse de rotation limite spécifiable.

2. Procédé selon la revendication 1, **caractérisé en ce que** le signal d'information de vitesse de rotation supplémentaire est généré en fonction de l'intensité du champ magnétique détecté.

3. Procédé selon l'une des revendications précédentes, **caractérisé en ce que** le récepteur de signal est conçu avec trois éléments capteurs (S_{L}, S_{M}, S_{R}), les signaux de sortie des éléments capteurs (S_{L}, S_{M}, S_{R}) étant combinés entre eux pour augmenter la résolution du signal d'information de vitesse de rotation.

4. Procédé selon l'une des revendications précédentes, **caractérisé en ce qu'**un signal d'information de vitesse de rotation supplémentaire est généré à chaque fois qu'un maximum d'intensité de champ magnétique est détecté.

5. Dispositif de fonctionnement d'un capteur de vitesse de rotation, en particulier d'un véhicule automobile, qui comporte une bague génératrice de signal comprenant une pluralité d'éléments magnétiques répartis régulièrement sur sa circonférence avec une orientation magnétique alternée et un récepteur de signal comprenant au moins deux éléments capteurs (S_{L}, S_{M}, S_{R}) destinés à détecter les champs magnétiques des éléments magnétiques, les éléments capteurs (S_{L}, S_{M}, S_{R}) étant disposés à équidistance les uns des autres, ledit dispositif comprenant un appareil de commande qui est conçu pour générer des bits d'information en fonction des intensités des champs magnétiques détectées par les éléments capteurs (S_{L}, S_{M}, S_{R}) et pour les rendre disponibles sous la forme d'un signal d'information de vitesse de rotation, **caractérisé en ce que** l'appareil de commande est spécialement conçu pour mettre en œuvre le procédé selon l'une des revendications 1 à 4.

6. Organe de détection de vitesse de rotation destiné à un véhicule automobile, ledit organe comprenant un capteur de vitesse de rotation qui comporte une bague génératrice de signal comprenant une pluralité d'éléments magnétiques régulièrement répartis sur sa circonférence avec une orientation magnétique alternée et un récepteur de signal comprenant au moins deux éléments capteurs (S_{L}, S_{M}, S_{R}) destinés à détecter les intensités des champs magnétiques des éléments magnétiques, les éléments capteurs (S_{L}, S_{M}, S_{R}) étant disposés à équidistance les uns des autres, **caractérisé par** un dispositif selon la revendication 5 de fonctionnement du capteur de vitesse de rotation.

7. Organe de détection de vitesse de rotation selon la revendication 6, **caractérisé en ce que** le récepteur de signal comporte trois éléments capteurs (S_{L}, S_{M}, S_{R}) qui sont montés en pont.
